# EUROPÄISCHE PATENTANMELDUNG

(11) **EP 1 449 428 A1**
(43) Veröffentlichungstag der Anmeldung: **25.08.2004**
(21) Anmeldenummer: 04090054.0
(22) Anmeldetag: 17.02.2004
(51) Int. Cl.: A01K 5/01, A01K 5/02

(54) **Automatisch öffnender Futternapf**

(30) Priorität: 19.02.2003 DE 20302637 U
(71) Anmelder: Sodeikat, Jaqueline, 14776 Brandenburg (DE)
(72) Erfinder: Sodeikat, Jaqueline, 14776 Brandenburg (DE)
(74) Vertreter: Heitsch, Wolfgang

(57) **Zusammenfassung**

Die vorliegende Erfindung betrifft einen automatisch öffnenden Futternapf. Nachteilig bei den üblichen offen gestalteten Futternäpfen ist, dass sich auf dem ausgereichte Futter Insekten, wie Fliegen oder andere Schädlinge, ausbreiten können und so das Futter verunreinigen und dadurch Krankheiten übertragen werden können. Bei Futterautomaten mit mechanischer Schließvorrichtung des Futterbehälters, welche ein bestimmtes Mindestgewicht voraussetzen, werden Tiere mit geringem Gewicht von der Benutzung ausgeschlossen. Zeitaufwendiges Lernverhalten und Training der Tiere setzen Futternäpfe mit Öffnungs- und Schließvorrichtung sowie automatische Dosierspender voraus.

Der Erfindung liegt das Problem zu Grunde, einen Futternapf zu entwickeln, durch den die genannten Nachteile vermieden werden und der durch die Kombination bekannter Baueile preiswert herstellbar ist, wobei konstruktionsbedingt gleichfalls äußere Formen individuell dem jeweiligen Bedarf anpassbar sind.

## Beschreibung

Die Erfindung betrifft einen automatischen Futternapf, der sich besonders für Haustiere, wie Katzen und Hunde, eignet. Es sind eine Vielzahl von Futternäpfen der verschiedensten Formen bekannt. So ist die Mehrzahl aller Näpfe schüsselförmig, mit oder ohne Deckel, bzw. mit den Zugang verbessernden Ausnehmungen gestaltet.

Es ist auch ein Futterautomat nach der DE 34 40 462 Al bekannt, wo die Abdeckung mit einer Schwenkvorrichtung, welche mit einem Trittbrett gekoppelt ist, bedient wird. Das heißt, die schwenkbare Abdeckung reagiert auf eine eingestellte Mindestbelastung, insbesondere bei Geflügel.

Ferner wurde ein Futternapf mit Öffnungs- und Schließvorrichtung in der DE 198 42 307 Al veröffentlicht, wo eine Kombination aus Futter- und Wassernapf mit einem mechanisch bewegten Deckel zur Abdeckung Verwendung findet, wobei dieser Deckel mit einem als schräge Rampe angeordneten Trittbrett gelenkig verbunden ist. Beim Betreten dieser Rampe durch ein Haustier wird die Rampe heruntergedrückt und verursacht somit durch die gelenkige Kopplung an dem Deckel das Öffnen der Napfabdeckung. Sobald die Rampe nicht mehr durch das Gewicht des Haustieres beaufschlagt ist, verursacht das Eigengewicht des Deckels dessen Herunterklappen und somit Verschließen des Futternapfes.

Außerdem wird ein automatischer Dosierspender von Trockenfutter für Haustiere (Hunde, Katzen) in der DE 299 03 361 U1 beschrieben.

Anliegen dieser Erfindung ist, dem Tierhalter die Möglichkeit einzuräumen, sein Haustier so zu trainieren, dass durch artspezifische Geräusche das Spendergerät mit einer Dosiereinheit der Trockennahrung gesteuert wird. Das Tier kann auf diese Weise die Freigabe einer Futtermittelportion selbst auslösen.

Nachteilig bei den üblichen offen gestalteten Futternäpfen ist, dass sich auf dem ausgereichte Futter Insekten, wie Fliegen oder andere Schädlinge, ausbreiten können und so das Futter verunreinigen und dadurch Krankheiten übertragen werden können. Bei Futterautomaten mit mechanischer Schließvorrichtung des Futterbehälters, welche ein bestimmtes Mindestgewicht voraussetzen, werden Tiere mit geringem Gewicht von der Benutzung ausgeschlossen. Zeitaufwendiges Lemverhalten und Training der Tiere setzen Futternäpfe mit Öffnungs- und Schließvorrichtung sowie automatische Dosierspender voraus.

Der im Anspruch 1 angegebenen Erfindung liegt das Problem zu Grunde, einen Futternapf zu entwickeln, durch den die genannten Nachteile vermieden werden und der durch die Kombination bekannter Baueile preiswert herstellbar ist, wobei konstruktionsbedingt gleichfalls äußere Formen individuell dem jeweiligen Bedarf anpassbar sind.

Dieses Problem wird mit den Maßnahmen des Anspruchs 1 und den Unteransprüchen gelöst. So wird mit der Erfindung für die vorgesehene Anwendung für Tier und Mensch eine hygienische Ausreichung des Futters erreicht, ohne dass vor oder nach dem Fressvorgang Insekten, wie Fliegen oder andere Schädlinge das Futter verunreinigen. Außerdem ist der Futternapf auf Grund seiner konstruktiven Lösung leicht und je nach Bedarf in seinen äußeren Konturen variabel gestaltbar.

Ein Ausführungsbeispiel wird anhand der Figur 1 bis 3 erläutert. Es zeigen:
- Fig. 1: eine Seitenansicht eines teilweise geöffneten Futternapfes
- Fig. 2: Vorderansicht nach Fig. 1

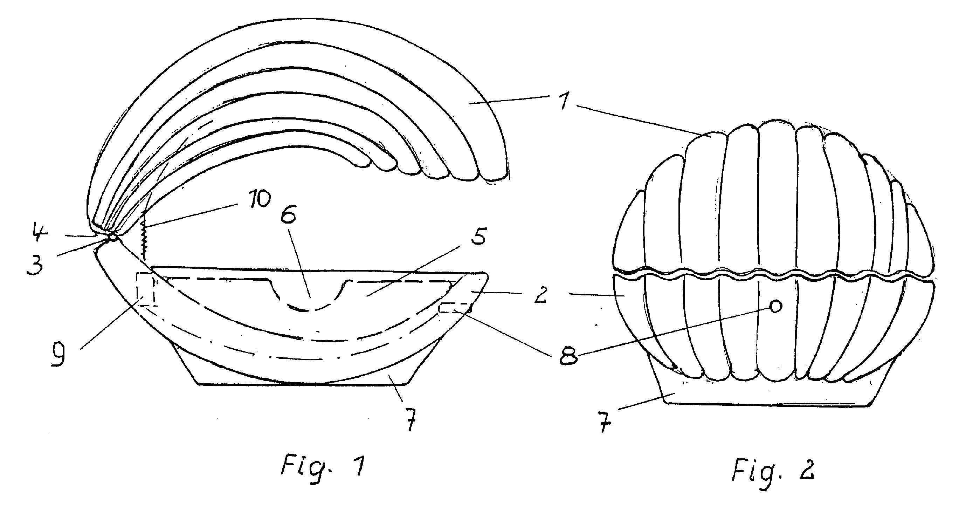

Nach Fig. 1 besteht der Futternapf aus einer beispielsweise muschelförmig ausgebildeten Oberhälfte 1 und einer als Gegenstück dazu dienenden Unterhälfte 2. Oberhälfte 1 und Unterhälfte 2 sind mit einem gelenkartigen Drehpunkt 3 fest miteinander verbunden. Um der Oberhälfte 1 ein Aufklappen zu ermöglichen, ist jeweils die Ober- und Unterhälfte 1;2 mit einer Abschrägung 4 versehen, so dass diese im geschlossenen Zustand als Einkerbung sichtbar ist. In der Unterhälfte 2 ist passgenau eine herausnehmbare Schale 5 eingelegt, in welche beidseitig Ausnehmungen 6 zur leichteren Entnahme der Schale 5 eingelassen sind. Zur Erreichung einer sicheren Standfläche ist die Unterhälfte 2 des Futternapfes mit einem der Form angepassten Fuß 7 versehen.

Um ein automatisches Öffnen bei Annäherung eines Haustieres (Katze) bei ca. 20 bis 30 cm zu ermöglichen, ist in der Vorderseite der Unterhälfte 2 des Futternapfes ein auf diese Entfernung geeichter Sensor 8 eingebaut, der ein entsprechendes Signal auf eine gleichfalls in der Unterhälfte 2 untergebrachte Antriebseinheit 9 für einen, die Ober- und Unterhälfte 1,2 verbindenden Schließmechanismus 10 überträgt. Die Antriebseinheit 9 kann dabei entweder über das Stromnetz oder über einen Akku gespeist werden. Nach Beendigung des Fressvorgangs und Auslösen eines weiteren Signals über den Sensor 8 wird über den Schließmechanismus 10 der Futternapf wieder geschlossen, so dass eventuelles Restfutter für Insekten oder andere Schädlinge nicht zugänglich ist.

## Patentansprüche

1. Automatisch öffnender Futternapf unter Verwendung bekannter Elemente, **dadurch gekennzeichnet, dass** ein Futternapf aus einer Oberhälfte (1) und einer als Gegenstück dienenden Unterhälfte (2), verbunden durch einen gelenkartigen Drehpunkt (3) besteht, wobei in der Vorderseite der Unterhälfte (2) ein auf eine entsprechende Entfernung geeichter Sensor (8), der mit einer Antriebseinheit (9) für einen Schließmechanismus (10) verbunden ist, eingebaut ist, so dass nach jeder Impulsgebung sich der Futternapf öffnet oder schließt.

2. Automatisch öffnender Futternapf nach Anspruch 1 **dadurch gekennzeichnet, dass** die Antriebseinheit (9), verbunden mit dem Schließmechanismus (10), je nach Gestaltung des Futternapfes entweder in der Oberhälfte (1) oder Unterhälfte (2) untergebracht ist.

3. Automatisch öffnender Futternapf nach den Ansprüchen 1 und 2 **dadurch gekennzeichnet, dass** der Schließmechanismus (10) gleichzeitig als weiteres Verbindungselement zwischen der Oberhälfte (1) und Unterhälfte (2) dient.

4. Automatisch öffnender Futternapf nach den Ansprüchen 1 bis 3 **dadurch gekennzeichnet, dass** die Antriebseinheit (9) entweder über das Stromnetz oder über einen Akku angetrieben wird.

5. Automatisch öffnender Futternapf nach Anspruch 1 **dadurch gekennzeichnet, dass** in der Unterhälfte (2) eine passgenaue herausnehmbare Schale eingelegt ist, welche beidseitig zur leichteren Entnahme mit Ausnehmungen versehbar ist.

6. Automatisch öffnender Futternapf nach Anspruch 1 **dadurch gekennzeichnet, dass** die Oberhälfte (1) und die Unterhälfte (2), ausgehend vom Drehpunkt (3) mit einer Abschrägung (4) versehen ist.

7. Automatisch öffnender Futternapf nach den Ansprüchen 1 und 5 **dadurch gekennzeichnet, dass** die Unterhälfte (2) zur Erreichung der Standsicherheit mit einem, der Form angepassten Fuß (7) versehen ist.
